# EUROPEAN PATENT SPECIFICATION

(11) **EP 0 705 535 B1**
(45) Date of publication and mention of the grant of the patent: **29.04.1998**
(21) Application number: 95115636.3
(22) Date of filing: 04.10.1995
(51) Int. Cl.: A01G 17/04, A01G 23/04

(54) **Modular support for transplanted plants**
Modulare Stütze für verpflanzte Pflanzen
Support modulaire pour plantes transplantées

(30) Priority: 07.10.1994 IT MI940670 U
(43) Date of publication of application: 10.04.1996
(73) Proprietor: FACCHINETTI Luciana - ALTINI Mario trading under the trading style VIVAIO TRI PASS di FACCHINETTI E ALTINI S.n.c., 24060 Gorlago (Bergamo) (IT)
(72) Inventor: Altini, Mario, I-24060 Gorlago (Prov. of Bergamo) (IT)
(74) Representative: Modiano, Guido, Dr.-Ing.

(56) References cited:
- DE-A- 4 008 580
- US-A- 4 520 590
- US-A- 4 894 950
- US-A- 4 922 653

## Description

The present invention relates to a structure with modular components and openable collar, particularly adapted for supporting transplanted plants in an upright position in order to allow their root-taking and -forming.

It is well-known that many plants and trees of various sizes are grown in plant nurseries to allow to use them, by transplant, in other locations such as avenues, parks, gardens, and the like, to enhance and/or improve the aesthetics of these locations.

Transplanting a small- and medium-sized plant or tree currently entails removing the plant from its growing place so that a part of the soil that surrounds it, known as sod, remains attached to the roots; then a larger hole (approximately twice as large as the sod) is dug in the transplant area; the plant and the associated sod are placed in this larger hole, and then three (or more) supporting posts are inserted at the sides of the hole, orientating them towards the trunk of the plant. Thereafter, the ends of the supporting posts (known as braces) are tied to the plant with flexible means, such as ropes, metal cables, or the like. Finally, the hole is filled with soil, which is then tamped. With this supporting system, the transplanted plant remains upright with no danger that the sod might separate from the roots.

However, since the braces lie outside the hole and are sometimes very long (for example three or four meters long in the case of large-size plants or trees) they occupy significant space around the plant and are thus aesthetically unpleasant. Additionally, the known braces constitute a dangerous obstacle for people and animals.

Furthermore, the braces protruding out of the soil that surrounds the plant also entail the drawback that they require cutting other young plants to provide them and hinder periodical cutting of the grass around the transplanted plant; said cutting, even after removing the braces, can cause damage to the bark of the plant, especially if lawn-mowers or the like are used.

In practice, therefore, current transplants entail significant financial burdens for forming the braces and the use of two or three workers to install and fix said braces, and also have the drawback that they produce a supporting structure that is aesthetically unpleasant as well as dangerous and usable only once in practice.

DE-A-4008580 discloses a method for securing trees against falling in which at least one earth anchor, which grips on a strong tree root, is inserted at least about 3 m deep into the ground.

Accordingly, a principal aim of the present invention is to provide a supporting structure for transplanted plants that is conceived and structured so as to fully obviate the practical, economical, and aesthetic problems entailed by the use of braces arranged outside the soil affected by the plant, and most of all such that it can be reused several times, without practical difficulties and always with the same effectiveness and reliability, and which can also be used for transplanting potted plants or the like.

An object of the invention is to provide a supporting structure of the above specified type that is structured so as to be easily adapted, quickly and without using accessories and/or operations for adapting the braces to the various situations, for plants the height and trunk diameter whereof vary significantly.

This aim, this object, and others which will become apparent from the following detailed description are achieved by a supporting structure for plants as defined in the appended claims.

More particularly, and according to a first preferred embodiment, said supporting structure uses three horizontal rod-like elements, two whereof are rigidly coupled to (or monolithic with) each other at one of their free ends and are longer than the third horizontal element, so as to form a single element that is curved at substantially 90° and is meant to accommodate the trunk of the plant in the curved region; the third horizontal element being shorter than the other elements and being detachably anchored thereto in the curved region between the two first elements; the plant being fastened to the structure by means of a half-collar or the like adjustable by means of screw-like spacers or the like; said fastening being such as to close, with the interposition of a flexible sleeve, the trunk of the plant between the curved region of the first two elements and the half-collar.

According to another embodiment, said horizontal rod-like elements have the same length and each one is provided, at its free end, with a portion shaped like a circular arc; said circular arcs have screw-like anchoring means for their stable connection around the trunk of the plant after interposing a flexible sleeve-like sheath.

Finally, said vertical rod-like elements are preferably constituted by straight tubular bodies adapted to allow, when required, the introduction of fertilizers in the soil that surrounds the roots of the transplanted plant.

Further characteristics and advantages of the present invention will become apparent from the following detailed description, given with reference to the accompanying drawings, which are provided merely by way of non-limitative example and wherein:
figure 1 is a view of a supporting structure for plants to be transplanted, executed according to the invention, and shown after installation, that is to say, in the position for supporting a plant inside a hole formed in the soil;
figure 2 is a top or plan view of the structure according to the invention on its own, in the position in which it is closed around the trunk of a medium-sized plant;
figure 3 is a view of a different embodiment of the structure of figures 1 and 2;
figure 4 is a view of a further embodiment of said figures 1 and 2; and
figures 5, 5a, and 6 are plan and sectional views of two types of sleeve made of rubber or the like.

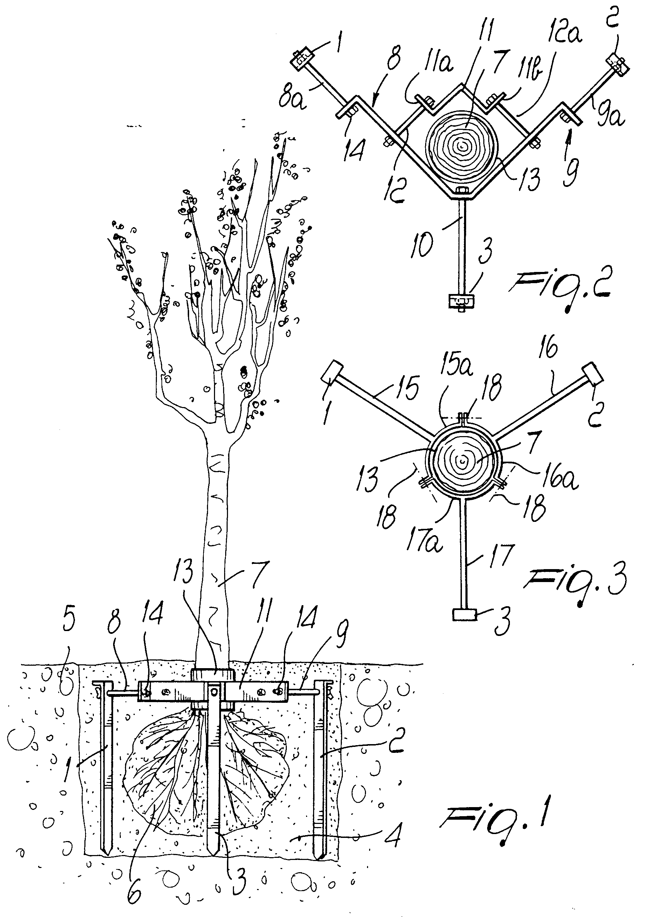

With reference to the above figures, and in particular to figures 1 and 2, the supporting structure according to the invention is conceived and structured so as to remain installed, fully embedded and concealed in the hole formed in the soil in a known manner.

Said structure in fact comprises three metallic rod-like elements 1-2-3 which, after placing the sod 6 with the roots in the hole 4, are driven vertically inside the hole 4, which is substantially quadrangular or even cylindrical and is formed in a known manner in the soil 5, at a substantially equal distance from each other and with an angular spacing as shown in figure 2, that is to say, so that they lie at the corners of an isosceles triangle or the like, in the central region whereof the sod is placed. Horizontal rod-like elements 8-9-10 are furthermore connected to said three vertical elements by virtue of screw means or the like; their length is adjustable so as to converge towards the plant or tree and then be able to fasten it regardless of the diameter of its trunk.

More specifically, the embodiment shown in figures 1 and 2 entails forming the horizontal elements 8 and 9 starting from a single rod-like element that is subsequently bent at an angle (approximately 90°) so as to form the two elements 8-9 and then allow to accommodate, in the curved region between the two elements 8-9, the trunk of the plant 7 above the sod. The third horizontal rod-like element 10, which is shorter than the previous ones, is furthermore connected by screw means or the like 10a to the curved region between the elements 8-9.

The plant, which is already located in the curved region (figure 2) between the elements 8-9, is then fastened by virtue of a collar 11 that is substantially a curved flat element having two opposite lugs 11a-11b which allow to tighten the collar around the trunk by virtue of two traction elements 12-12a anchored at right angles to the elements 8-9; said traction elements are threaded so that, by passing through holes formed in the lugs of the collar, said collar can be tightened around the plant by means of nuts.

In order to safeguard the integrity of the bark of the plant in the region where the collar 11 is fastened, a sleeve-shaped tubular sheath 13, made of flexible material such as natural or synthetic rubber, nonrigid plastics, or the like, is interposed between said collar and the trunk.

Furthermore, in order to allow the above described structure to fasten trunks having different diameters or to cover any excessive distances between the walls of the hole and the plant arranged centrally in said hole, at least the horizontal traction elements 8-9 are made of two parts that can be telescopically adjusted in length with respect to each other by screwing or unscrewing a nut 14 that acts by resting on lugs that protrude from the traction elements on a threaded portion of the initial part 8a-9a of the two traction elements 8-9.

The traction element 10 can also be provided so that it can elongate telescopically according to the requirements.

According to another embodiment, which is also within the scope of the present invention, the supporting structure with vertical rod-like elements can have three horizontal rigid elements or traction elements 15-16-17 (figure 3) of equal length; sectors of a cylindrical sleeve 15a-16a-17a are anchored to the free end of said elements that lies close to the trunk, and said sectors are provided, at their ends, with lugs that mate with each other so as to provide, by virtue of traction screws 18, a rigid tubular body that encloses the plant 7 and the corresponding flexible protective sleeve 13.

The length of said screws 18 is such as to allow to fasten the cylindrical sectors 15a-16a-17a that form the collar on plants of different diameters.

The structure described above therefore remains inside the hole 4, and said hole is then filled with soil, as shown in figure 1, until the structure and the corresponding sod are covered.

After a period of a few months, which varies according to the type and size of the transplanted plant, the structure is separated from the plant and extracted so that it can be reused for other transplants.

Furthermore, in order to avoid damaging the bark of the plant during grass cutting, in the region above the filled hole, the length of the elastic tubular sheath 13 can be such that it protrudes partially from the ground, so as to wrap around a part of the trunk, protecting it from the cutting devices of conventional lawn-mowers.

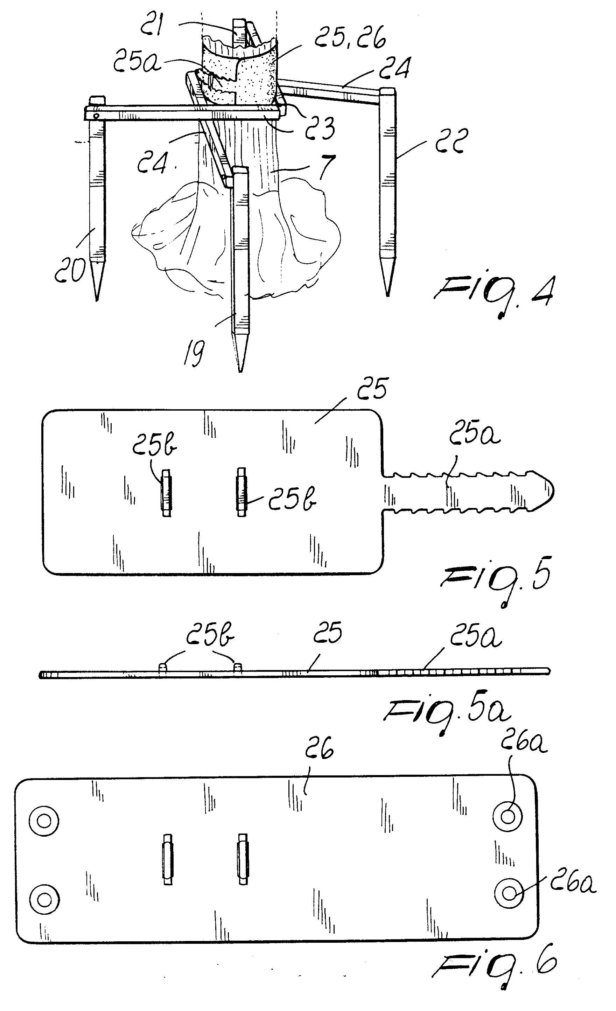

Also according to the invention, the supporting structure can be constituted by four vertical elements 19-20-21-22 (figure 4) made of wood, metal, plastics, or the like, which are arranged inside a quadrangular hole and at the top whereof it is possible to anchor two identical horizontal elements 23-24 that are substantially two pairs of identical rod-like elements shaped like a V or the like and arranged so that they are mutually opposite and co-planar, as clearly shown in figure 4.

In this case, too, the V-shaped elements 23-24 can be provided so that they can elongate telescopically to adapt them to the various dimensions of the plant to be supported; in this case, too, a fitting made of rubber or the like, having an adjustable height and length, is inserted between the plant and the portions of the elements that form the external quadrilateral.

Both for a structure having three vertical supporting elements and for a structure having four of said elements, the rubber sleeve or gasket is in fact constituted by an elastic belt 25 or 26 (figures 5-5a and figure 6) having, in one case, a toothed tab 25a adapted to be wrapped in a tubular manner around the plant and then inserted in bridges 25b and then pulled so as to adhere to said plant.

The elastic belt 26 (figure 6) can instead have, as securing means, once the tubular element has been formed, elastic press-studs 26a or the like.

For all of the above described and illustrated embodiments, the dimensions of the vertical and horizontal rod-like elements, as well as the materials employed (metallic tubular elements, wood or plastic rods, and the like), can vary according to the requirements; likewise, the dimensions and shape of the elastic belts and of the collar fastening system can also vary according to the requirements without abandoning the scope of the protection of the invention.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Supporting structure for plants to be transplanted, characterized in that it comprises at least three rod-like elements (1, 2, 3; 19, 20, 21, 22) that are to be driven substantially vertically and equidistantly at the bottom of a hole (4) for accommodating a plant (7) and sod of earth (6), so that the upper ends of the rod-like elements lie partially beneath the rim of the hole (4); a horizontal rod-like element (8, 9, 10; 15, 16, 17; 23, 24) being anchored detachably to the upper end of each vertical rod-like element (1, 2, 3; 19, 20, 21, 22) and being directed towards the trunk of the plant (7) arranged in a central region of the hole (4); at least one collar (11) for fastening the trunk of the plant (7) to the ends of said horizontal elements (8, 9, 10; 15, 16, 17; 23, 24), said collar (11), having an adjustable width and being connectable to said horizontal elements (8, 9, 10; 15, 16, 17; 23, 24), with the interposition of a protective sleeve (13) made of a flexible material, between said collar (11) and the trunk of the plant (7).

2. Supporting structure according to claim 1, characterized in that it comprises three horizontal rod-like elements (8, 9, 10), two (8, 9) of which are rigidly coupled to each other at one of their free ends and are longer than the third horizontal element (10), so as to form a single element that is curved substantially at 90° for accommodating the trunk of a plant (7) in the curved region; the third horizontal element (10) being shorter than the other elements (8,9) and being anchored thereto detachably in the curved region between the first two elements; the plant (7) being fastened to the structure by virtue of an adjustable half-collar (11), adapted to close, with the interposition of a flexible sleeve (13), the trunk of the plant (7) between the curved region of the first two elements (8, 9) and the half-collar (11).

3. Supporting structure according to claims 1 and 2, characterized in that said horizontal rod-like elements (15, 16, 17) have the same length and in that each one is provided, at its free end, with a portion shaped like a circular arc (15a, 16a, 17a), said circular arcs (15a, 16a, 17a) having screw-like adjustment (18) and anchoring means for stable connection around the trunk of the plant (7), after interposing a flexible sleeve-like sheath (13).

4. Supporting structure according to claims 1 to 3, characterized in that said vertical rod-like elements (1, 2, 3; 19, 20, 21, 22) are preferably constituted by straight tubular bodies allowing, when required, to introduce fertilizer in the soil (5) that surrounds the roots of the transplanted plant (7).

5. Structure according to the preceding claims, characterized in that said tubular sheath (13) made of flexible material has such a height or length that it partially protrudes from the surface of the soil (5) in order to protect the lower portion of the plant (7).

6. Structure according to one or more of the preceding claims, characterized in that it is constituted by four vertical rod-like elements (19, 20, 21, 22) driven at the corners of a quadrangular hole; in that the free ends of two identical horizontal elements (23, 24), also made of wood or the like, can be detachably anchored to the top of said vertical rod-like elements (19, 20, 21, 22); in that said horizontal elements (23, 24) are constituted by pairs of elements that are arranged so as to form a V or the like and are in turn arranged mutually opposite and co-planar, so as to form, between them, a frame for retaining the plant (7) to be transplanted.

7. Structure according to the preceding claims, characterized in that said protection sleeve (13) or collar is constituted by an elastic belt (25, 26) provided with a toothed tab (25a) adapted to be inserted in bridges (25b) after wrapping the belt (25, 26) around the trunk of the plant (7) and be then pulled until the tubular element is stably fastened to said trunk by locking the teeth of the tab (25a) inside the bridge (25b).

## Patentansprüche

1. Stützstruktur für zu versetzende Pflanzen, dadurch **gekennzeichnet**, daß sie mindestens drei stabartige Elemente (1, 2, 3; 19, 20, 21, 22) hat, die weitgehend vertikal und mit zueinander gleichen Abständen in den Boden eines Loches, das einer Pflanze (7) mit Wurzelballen (6) angepaßt ist, so einzutreiben sind, daß ihre oberen Enden teilweise unter dem Rand des Loches (4) liegen; daß ein horizontales stabartiges Element (8, 9, 10; 15, 16, 17; 23, 24) lösbar am oberen Ende eines jeden vertikalen stabartigen Elements (1, 2, 3; 19, 20, 21, 22) verankert und auf den Stamm der Pflanze (7) im mittleren Bereich des Loches (4) ausgerichtet ist; und daß mindestens eine Zwinge (11) zum Befestigen des Stammes der Pflanze (7) an den Enden der horizontalen Elemente (8, 9, 10; 15, 16, 17; 23, 24) eine einstellbare Breite hat und mit den horizontalen Elementen (8, 9, 10; 15, 16, 17; 23, 24) unter Zwischenlage einer Schutzhülse (13) aus flexiblem Material zwischen der Zwinge (11) und dem Stamm der Pflanze (7) verbindbar ist.

2. Stützstruktur nach Anspruch 1, dadurch **gekennzeichnet**, daß sie drei horizontale stabartige Elemente (8, 9, 10) hat, von denen zwei (8, 9) an einem ihrer freien Enden starr miteinander verbunden und länger als das dritte horizontale Element (10) sind, so daß sie ein um etwa 90° gebogenes Element zur Anpassung an den Stamm einer Pflanze (7) in dem gebogenen Bereich bilden; daß das dritte horizontale Element (10) kürzer als die anderen Elemente (8, 9) ist und mit diesen in dem gebogenen Bereich zwischen den ersten beiden Elementen lösbar verankert ist; daß die Pflanze (7) an der Struktur durch eine einstellbare Halbzwinge (11) befestigt ist, die unter Zwischenlage einer flexiblen Hülse (13) den Stamm der Pflanze (7) zwischen dem gebogenen Bereich der ersten beiden Elemente (8, 9) und der Halbzwinge (11) einschließt.

3. Stützstruktur nach Anspruch 1 und 2, dadurch **gekennzeichnet**, daß die horizontalen stabartigen Elemente (15, 16, 17) übereinstimmende Länge haben und jeweils an seinem freien Ende mit einem kreisbogenförmigen Teil (15a, 16a, 17a) versehen sind, und daß die kreisbogenförmigen Teile (15, 16a, 17a) schraubenartige Einstell- und Verankerungsmittel (18) zur stabilen Verbindung um den Stamm der Pflanze (7) herum haben, nachdem eine flexible hülsenartige Hülle (13) zwischengelegt ist.

4. Stützstruktur nach den Ansprüchen 1 bis 3, dadurch **gekennzeichnet**, daß die vertikalen stabartigen Elemente (1, 2, 3; 19, 20, 21, 22) vorzugsweise durch gerade rohrförmige Körper gebildet sind, die erforderlichenfalls das Einführen von Dünger in den Boden (5) in der Umgebung der Wurzeln der versetzten Pflanze (7) erlauben.

5. Stützstruktur nach den vorhergehenden Ansprüchen, dadurch **gekennzeichnet**, daß die rohrförmige Hülse (13) aus flexiblem Material eine solche Höhe oder Länge hat, daß sie aus der Oberfläche des Bodens (5) zum Schutz des unteren Teils der Pflanze (7) teilweise hervorsteht.

6. Stützstruktur nach einem oder mehreren der vorhergehenden Ansprüche, dadurch **gekennzeichnet**, daß sie durch vier vertikale stabartige Elemente (19, 20, 21, 22) gebildet ist, die an den Ecken eines viereckigen Loches eingetrieben sind; daß die freien Enden zweier identischer horizontaler Elemente (23, 24), die gleichfalls aus Holz o.ä. bestehen, lösbar an dem oberen Ende der vertikalen stabartigen Elemente (19, 20, 21, 22) verankert sind; und daß die horizontalen Elemente (23, 24) durch Elementpaare gebildet sind, die V-förmig o.ä. angeordnet und einander gegenüberliegend in gemeinsamer Ebene angeordnet sind, so daß sie zwischen sich einen Rahmen zum Halten der zu versetzenden Pflanze (7) bilden.

7. Stützstruktur nach den vorhergehenden Ansprüchen, dadurch **gekennzeichnet**, daß die Schutzhülse (13) oder Manschette durch ein elastisches Band (25, 26) mit gezahnter Lasche (25a) gebildet ist, die in Brücken (25b) einzuschieben sind, nachdem das Band (25, 26) um den Stamm der Pflanze (7) gewickelt ist, und dann gezogen werden, bis das rohrförmige Element stabil an dem Stamm befestigt ist, indem die Zähne der Lasche (25a) in der Brücke (25b) festsitzen.

## Revendications

1. Structure de support pour des plantes à transplanter, caractérisée en ce qu'elle comporte au moins trois éléments (1, 2, 3; 19, 20, 21, 22) en forme de tige qui sont destinées à être placés de façon sensiblement verticale et équidistante au fond d'un trou (4) pour recevoir une plante (7) avec une motte de terre (6), de telle façon que les extrémités supérieures des éléments en forme de tige soient situées partiellement en dessous du bord du trou (4); un élément horizontal en forme de tige (8, 9, 10; 15, 16, 17; 23, 24) étant ancré de façon amovible à l'extrémité supérieure de chaque élément vertical (1, 2, 3; 19, 20, 21, 22) en forme de tige et étant dirigé vers le tronc de la plante (7) disposé dans une région centrale du trou (4); au moins un collier (11) pour fixer le tronc de la plante (7) aux extrémités desdits éléments horizontaux (8, 9, 10; 15, 16, 17; 23, 24), ledit collier (11) présentant une largeur réglable et étant susceptible d'être relié auxdits éléments horizontaux (8, 9, 10; 15, 16, 17; 23, 24), avec interposition d'un manchon de protection (13) réalisé en un matériau flexible, entre ledit collier (11) et le tronc de la plante (7).

2. Structure de support selon la revendication 1, caractérisée en ce qu'elle comporte trois éléments horizontaux en forme de tige (8, 9, 10) dont deux (8, 9) sont rigidement couplés l'un à l'autre à l'une de leurs extrémités libres et sont plus longs que le troisième élément horizontal (10), de façon à former un élément unique qui est incurvé sensiblement à 90° pour recevoir le tronc d'une plante (7) dans la région incurvée; le troisième élément horizontal (10) étant plus court que les autres éléments (8, 9) et étant ancré à ces éléments de façon amovible dans la région incurvée entre les deux premiers éléments; la plante (7) étant fixée à la structure au moyen d'un demi-collier réglable (11) susceptible d'enfermer, avec interposition d'un manchon flexible (13), le tronc de la plante (7) entre la région incurvée des deux premiers éléments (8, 9) et le demi-collier (11).

3. Structure de support selon les revendications 1 et 2, caractérisée en ce que lesdits éléments horizontaux en forme de tige (15, 16, 17) présentent la même longueur et en ce que chacun d'entre eux est muni, à son extrémité libre, d'une partie présentant la conformation d'un arc circulaire (15a, 16a, 17a), lesdits arcs circulaires (15a, 16a, 17a) étant munis de moyens de réglage (18) et d'ancrage en forme de vis pour assurer la liaison stable autour du tronc de la plante (7), après interposition d'une gaine flexible en forme de manchon (13).

4. Structure de support selon les revendications 1 à 3, caractérisée en ce que lesdits éléments verticaux en forme de tige (1, 2, 3; 19, 20, 21, 22) sont de préférence constitués par des corps tubulaires droits permettant, si nécessaire, d'introduire des éléments fertilisants dans le sol (5) qui entoure les racines de la plante transplantée (7).

5. Structure selon les revendications précédentes, caractérisée en ce que ladite gaine tubulaire (13) réalisée en matériau flexible présente une hauteur ou une longueur telle qu'elle fasse partiellement saillie hors de la surface du sol (5), afin de protéger la partie inférieure de la plante (7).

6. Structure selon l'une ou plusieurs des revendications précédentes, caractérisée en ce qu'elle est constituée par quatre éléments verticaux en forme de tige (19, 20, 21, 22) destinés à être placés aux coins d'un trou rectangulaire;
en ce que les extrémités libres de deux éléments horizontaux identiques (23, 24), également réalisés en bois ou similaire, peuvent être fixés de façon amovible à la partie supérieure desdits éléments verticaux en forme de tige (19, 20, 21, 22);
en ce que lesdits éléments horizontaux (23, 24) sont constitués par des paires d'éléments qui sont agencés de façon à former un grand "V" ou similaire et qui sont à leur tour disposés mutuellement opposés et coplanaires, de façon à former, entre eux, un cadre pour retenir la plante (7) à transplanter.

7. Structure selon les revendications précédentes, caractérisée en ce que ledit manchon de protection (13) ou collier est constitué par une ceinture élastique (25, 26) munie d'une languette dentée (25a) susceptible d'être insérée dans les ponts (25b) après un roulement de la ceinture (25, 26) autour du tronc de la plante (7) et d'être ensuite tiré jusqu'à ce que l'élément tubulaire soit fixé de façon stable audit tronc en bloquant les dents de la languette (25a) à l'intérieur du pont (25b).
